# EUROPEAN PATENT SPECIFICATION

(11) **EP 0 625 542 B1**
(45) Date of publication and mention of the grant of the patent: **15.11.2000**
(21) Application number: 94303268.0
(22) Date of filing: 06.05.1994
(51) Int. Cl.: C08K 5/00, C08L 55/02

(54) **Stabiliser and thermoplastic compositions containing it**
Stabilisator und thermoplastische Zusammensetzungen, die diese enthalten
Stabilisateurs et compositions thermoplastiques contenant

(30) Priority: 12.05.1993 US 61641
(43) Date of publication of application: 23.11.1994
(60) Divisional application: 00107495.4
(73) Proprietor: GENERAL ELECTRIC COMPANY, Schenectady, NY 12345 (US)
(72) Inventor: Wozny, John Carl, Coolville, Ohio 45723 (US)
(74) Representative: Szary, Anne Catherine, Dr.

(56) References cited:
- EP-A- 0 049 133
- EP-A- 0 227 948
- US-A- 3 414 538
- PATENT ABSTRACTS OF JAPAN vol. 13, no. 431 (C-640) & JP-A-01 167 352 (SHOWA ELECTRIC WIRE & CABLE)
- DATABASE WPI Week 9316, Derwent Publications Ltd., London, GB; AN 93-129202 MITSUBISHI RAYON CO LTD & JP 5 065 412 A 19 March 1993

## Description

### BACKGROUND OF THE INVENTION

### Field of the Invention

This invention relates to polymeric compositions comprising a thermoplastic resin vinyl aromatic/alkenyl cyanide/diene rubber graft copolymer and a stabilizer system for protection of the polymeric compositions against degradation caused by exposure to heat and oxygen. More particularly, it relates to compositions comprising ABS resins (acrylonitrile/butadiene/styrene) and the like containing synergistic stabilizer systems.

The compositions of this invention find a wide variety of commercial applications as engineering plastics and structural and functional plastics in numerous end-product applications.

The tendency of ABS-type products to deteriorate under the influence of long exposures to heat and oxidation is evidenced by discoloration.

### DESCRIPTION OF THE RELATED ART

ABS resins comprise rubber-modified thermoplastic resins and include graft copolymers of rubbery compositions with acrylonitrile and styrene monomers. The term "graft copolymer" as is known (Journal of Polymer Science, volume 8, page 260, 1962) signifies resins resulting from a process wherein a substrate composition such as a diene rubber which contains unsaturation is subjected to polymerization with a monomer or mixture of monomers whereby pendant chains (grafts) are formed on the substrate. The molecules therefore of the resulting graft copolymer consist of two or more polymeric parts which result from the polymerization of a rubbery substrate with monomeric materials as indicated.

Stabilized ABS resin compositions are known, see Japanese Patent JP 85008710 issued March 5, 1985, which disclosed adding 0.1 to 5 weight percent of a composition comprising ingredients such as (a) 2,3'-methylene bis(4-methyl-6-tertbutylphenol (b) dilauryl thiodipropionate and distearyl pentaerythritol diphosphite.

### SUMMARY OF THE INVENTION

Stabilized thermoplastic resin compositions are provided which comprise a thermoplastic resin such as ABS resin, and a system which comprises synergistic combination of secondary antioxidants. The secondary antioxidants are thioesters and organic phosphites, preferably dilauryl thiodipropionate and tris(nonyl phenyl) phosphite. The compositions are synergistically stabilized by the system, and thus are free of phenolic antioxidants and aromatic amine antioxidants. The absence of phenolic antioxidants may provide secondary advantages such as elimination of color bodies yielded by such phenolics.

### DETAILED DESCRIPTION OF THE INVENTION

Stabilized thermoplastic resin compositions are provided comprising a thermoplastic resin such as an ABS resin and a stabilizer system comprising a synergistic combination of secondary antioxidants.

The thermoplastic resin is preferably an ABS resin. Alternatively the thermoplastic resin may be a blend of thermoplastic resin such as ABS resin and a bisphenol-A polycarbonate resin.

ABS resins which can be used according to the invention are mixtures of (b.1) 25-100 parts by weight of a graft polymer of ethylenically unsaturated monomers on rubbers of the series of diene monomer and EPDM rubbers and (b.2) 0-75 parts by weight of a rubber-free vinyl monomer polymer.

Graft polymers (b.1) in the context of the invention are those in which a monomer mixture of 95-50% by weight of styrene, α-methylstyrene or mixtures thereof based on the entire weight of the monomer mixture and 5-50% by weight of acrylonitrile, methacrylonitrile or mixtures thereof based on the entire weight of the monomer mixture, is polymerized, by grafting, onto a rubber.

Particularly suitable rubbers are polybutadiene, butadiene/styrene copolymers with up to 30% by weight of copolymerized styrene or copolymers of butadiene and acrylonitrile with up to 20% by weight of acrylonitrile. Further suitable rubbers are, for example, polyisoprene or polychloroprene. Examples of other suitable rubbers are EDPM rubber, that is to say rubber obtained from ethylene, propylene and a non-conjugated diene monomer. Diene monomer rubbers are particularly preferred.

The graft copolymers (b.1) contain 5-80% by weight, in particular 20-70% by weight, of rubber and 95-20% by weight, in particular 80-30% by weight, of monomers copolymerized by grafting. The rubbers in these graft copolymers are in the form of at least partially crosslinked particles of average particle size 0.08-5µm, in particular 0.1-1 µm. Such graft copolymers are prepared by free radical grafting copolymerization of monomers from the series of styrene, α-methylstyrene, acrylonitrile and methacrylonitrile in the presence of the rubbers to be grafted and are all known. Preferred preparation processes for such graft copolymers are emulsion, solution, bulk or suspension polymerization.

The dilauryl thiodipropionate is a diester of thiodipropionic acid. Alternatively, other diesters of thiodipropionic acid may be used including distearyl thiodipropionate.

Trisnonyl phenyl phosphite is commercially available and may be represented by the formula:

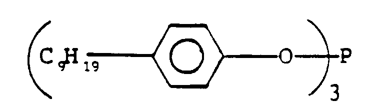

The compositions preferably comprise at least 30 percent by weight thermoplastic resin based on the total weight of the composition, more preferably at least 60 percent by weight thermoplastic resin, even preferably at least 90 percent by weight thermoplastic resin, most preferably at least 99 percent by weight thermoplastic resin. Preferably the thermoplastic resin is an ABS graft copolymer or a blend of an ABS graft copolymer with another polymer such as a bisphenol polycarbonate or a polybutylene terephthalate or a polyamide resin. For example, the thermoplastic resin may comprise from 30 to 95 weight percent ABS polymer and from 5 to 70 weight percent of a polymer selected from the group consisting of polyamides, polycarbonates and polybutylene terephthalates. The stabilizer system is present in the composition at a level of from 0.8 to 3.2 percent by weight of the composition. The stabilizer system preferably comprises a diester of thiodipropionic acid and trisnonylphenyl phosphite in weight ratios of 9:1 to 1:1 respectively. The composition thus preferably comprises the diester of thiodipropionic acid at a level of from 0.4 to 1.6 percent by weight based on the total weight of the composition. Preferably the trisnonylphenyl phosphite is present at a level of from 0.4 1.6 percent by weight based on the total weight of the composition.

The compositions are free of phenolic antioxidants and aromatic amine antioxidants.

Thioesters include dilauryl thiodipropionate, distearyl thiodipropionate, dimyristylthiodipropionate, ditridecyl thiodipropionate, mixed esters (lauryl and stearyl) of thiodipropionic acid, and pentaerythritol tetrakis(3-(didecyl thio) propionate), as well as other thioesters.

Organic phosphites include tris(nonylphenyl) phosphite, bis(2,4-di-t-butyl)pentaerythritol diphosphite, distearyl pentaerythritol diphosphite, as well as other organic phosphites.

The term consisting essentially of means that the composition is free of amounts of additives additional to those claimed which are sufficient to affect the basic and novel characteristic of the composition, namely the improved synergistic stability performance of the composition resulting from the synergistic combination of the thioester and the phosphite.

### Examples

The following examples illustrate the synergistic effects of combining dilaurylthiodipropionate (DLTDP) and trisnonylphenyl phosphite (TNPP) in emulsion ABS resin compositions. The stability (ST) of the compositions was measured at 190°C by the ISO-DSC Test and is measured by time in minutes with the longer the time representing the resin compositions having the greatest stability. Examples A1-A9 are comparative examples. Examples 1-16 are examples illustrating the present invention. Amounts are set out in weight parts per 100 parts by weight of ABS resin. The compositions do not contain a phenolic antioxidant. Additive effect (SE), in minutes, is the increased stabilization time compared to A1, Synergism (SG) is the increased time greater than the simple additive SE times for the corresponding amounts of DLTDP and TNPP. SG for example 1 is ST for example 1 minus (ST(A1) + SE(A2) + SE(A6)).

**Table 1**

| Example | A1 | A2 | A3 | A4 | A5 | A6 | A7 | A8 | A9 |
|---|---|---|---|---|---|---|---|---|---|
| DLTDP | 0 | 0.4 | 0.8 | 1.2 | 1.6 | 0 | 0 | 0 | 0 |
| TNPP | 0 | 0 | 0 | 0 | 0 | 0.4 | 0.8 | 1.2 | 1.6 |
| ST(min) | 4.5 | 9.5 | 10.0 | 10.5 | 13.5 | 6.0 | 10.8 | 14.0 | 17.0 |
| SE(A-Al) | 0 | 5.0 | 5.5 | 6.0 | 9.0 | 1.5 | 6.3 | 9.5 | 12.5 |

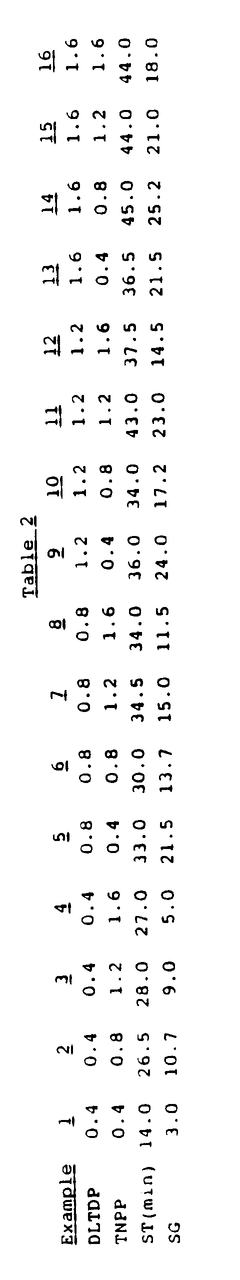

## Claims

1. A thermoplastic composition which is free of phenolic antioxidants and aromatic amine antioxidants, said composition comprising:
a) a vinyl aromatic/alkenyl cyanide/diene rubber graft copolymer;
b) from 0.8 to 3.2 weight percent based on the total weight of the composition of a synergistic stabilizer system comprising at
(i) a thioester and
(ii) an organic phosphite.

2. The composition of claim 1 wherein said composition consists of said graft copolymer and said system.

3. The composition of claim 1 wherein said graft copolymer is present at a level of at least 30 weight percent based on the total weight of the composition.

4. The composition of claim 3 wherein said composition further comprises an aromatic polycarbonate resin.

5. The composition of claim 1 wherein said graft copolymer is an acrylonitrile/butadiene/styrene graft copolymer.

6. The composition of claim 5 wherein said graft copolymer is present in said composition at a level of at least 90 weight percent based on the total weight of said composition.

7. The composition of claim 1 wherein said thioester is a dilaurylthiodipropionate and said organic phosphite is trisnonylphenyl phosphite.

8. The composition of claim 7 wherein said composition consists essentially of said graft copolymer, said dilaurylthiodipropionate and said tris(nonylphenyl)phosphite.

9. A stabilized thermoplastic composition free of phenolic antioxidants and aromatic amine antioxidants, and consisting essentially of:
a) a vinyl aromatic/alkenyl cyanide/diene rubber graft copolymer;
b) a thioester; and
c) an organic phosphite, wherein the amount of b) + c) is within the range of from 0.8 to 3.2 percent by weight based on the total weight of the composition.

## Patentansprüche

1. Thermoplastische Zusammensetzung ohne phenolische Antioxidantien und aromatische Amin-Antioxidantien, wobei die Zusammensetzung umfasst:
a) ein aromatisches Vinyl/Alkenylcyanid/Dienkautschuk-Pfropfcopolymer;
b) von 0,8 bis 3,2 Gew.-%, bezogen auf das Gesamtgewicht der Zusammensetzung, eines synergistischen Stabilisatorsystems, umfassend
(i) einen Thioester und
(ii) ein organisches Phosphit.

2. Zusammensetzung nach Anspruch 1, wobei die Zusammensetzung aus dem Pfropfcopolymer und dem System besteht.

3. Zusammensetzung nach Anspruch 1, wobei das Pfropfcopolymer in einer Menge von mindestens 30 Gew.-%, bezogen auf das Gesamtgewicht der Zusammensetzung, vorhanden ist.

4. Zusammensetzung nach Anspruch 3, wobei die Zusammensetzung weiter ein aromatisches Polycarbonatharz umfasst.

5. Zusammensetzung nach Anspruch 1, wobei das Pfropfcopolymer ein Acrylnitril/Butadien/Styrol-Pfropfcopolymer ist.

6. Zusammensetzung nach Anspruch 5, wobei das Pfropfcopolymer in der Zusammmensetzung in einer Menge von mindestens 90 Gew.-%, bezogen auf das Gesamtgewicht der Zusammmensetzung, vorhanden ist.

7. Zusammensetzung nach Anspruch 1, wobei der Thioester ein Dilaurylthiodipropionat und das organische Phosphit Trisnonylphenylphosphit ist.

8. Zusammensetzung nach Anspruch 7, wobei die Zusammensetzung im wesentlichen aus dem Pfropfcopolymer, dem Dilaurylthiodipropionat und dem Tris(nonylphenyl)phosphit besteht.

9. Stabilisierte thermoplastische Zusammensetzung ohne phenolische Antioxidantien und aromatische Amin-Antioxidantien, bestehend im wesentlichen aus:
a) einem aromatischen Vinyl/Alkenylcyanid/Dienkautschuk-Pfropfcopolymer;
b) einem Thioester und
c) einem organischen Phosphit, wobei die Menge von b) + c) im Bereich von 0,8 bis 3,2 Gew.-%, bezogen auf das Gesamtgewicht der Zusammensetzung, liegt.

## Revendications

1. Composition thermoplastique exempte d'antioxydants phénoliques et d'antioxydants du type amine aromatique, qui comprend :
(a) un copolymère greffé caoutchouc diène/cyanure d'alcényle/monomère aromatique vinylique,
(b) 0,8 à 3,2 % en poids par rapport au poids total de la composition, d'un système stabilisant synergique constitué de :
(i) un thioester, et
(ii) un phosphite organique.

2. Composition selon la revendication 1, qui est constituée dudit copolymère greffé et dudit système.

3. Composition selon la revendication 1, dans laquelle ledit copolymère greffé est présent en une proportion représentant au moins 30 % en poids du poids total de la composition.

4. Composition selon la revendication 3, qui comprend en outre une résine de polycarbonate aromatique.

5. Composition selon la revendication 1, dans laquelle ledit copolymère greffé est un copolymère greffé acrylonitrile/butadiène/styrène.

6. Composition selon la revendication 5, dans laquelle ledit copolymère greffé est présent en une proportion représentant au moins 90 % en poids du poids total de la composition.

7. Composition selon la revendication 1, dans laquelle ledit thioester est le thiodipropionate de dilauryle et ledit phosphite organique est le phosphite de tris(nonylphényle).

8. Composition selon la revendication 7, qui est constituée essentiellement dudit copolymère greffé, dudit thiodipropionate de dilauryle et dudit phosphite de tris(nonylphényle).

9. Composition thennoplastique stabilisée, exempte d'antioxydant phénolique et d'antioxydant du type amine aromatique, qui est constituée essentiellement de :
a) un copolymère greffé caoutchouc diène/cyanure d'alcényle/copolymère aromatique vinylique,
b) un thioester, et
c) un phosphite organique,
la proportion de la somme b) + c) représentant 0,8 à 3,2 % en poids du poids total de la composition.
